# EUROPEAN PATENT SPECIFICATION

(11) **EP 2 253 508 B1**
(45) Date of publication and mention of the grant of the patent: **18.07.2012**
(21) Application number: 10162715.6
(22) Date of filing: 12.05.2010
(51) Int. Cl.: B60P 7/08

(54) **Tensioning apparatus**
Spannvorrichtung
Dispositif de serrage

(30) Priority: 22.05.2009 US 470536
(43) Date of publication of application: 24.11.2010
(73) Proprietor: Yeu Yueh Enterprise Co., Ltd., Changhua County 507 (TW)
(72) Inventor: Huang, Han-Ching, Changhua County 507 Chinese Taipei (TW)
(74) Representative: Becker Kurig Straus

(56) References cited:
- WO-A1-2008/094146
- DE-A1-102008 015 632
- US-A1- 2007 056 146

## Description

### BACKGROUND OF THE INVENTION

### 1. Field of the Invention

The present invention relates generally to a tensioning apparatus, and more particularly, to a tensioning apparatus for a strap.

### 2. Description of the Related Art

U.S Pat. No.7,296,326 shows a tensioning apparatus including a reeling device. The reeling device is rotatably mounted between two sidewalls of a lever. The reeling device includes a shaft and a slot therein and two knobs connected to proximal and distal ends of the shaft respectively. A user can insert the end of the strap through the slot of the shaft and turn the knob to wind the strap on the shaft. Furthermore, the user generally grips the shaft to operably move the lever. However, when the strap is collected on the shaft, the strap would obstruct user to operate the grip. Another problem is that when the user turns the knob in a direction to wind the strap, it sometimes happens that the knob is liable to turn in an opposite direction to unwind the strap.

WO 2008/094146 discloses a cargo tightener comprising inter alia a frame, a lever and two shafts. A ratchet wheel is mounted to the first shaft wherein the end of a strap is introduced. The second or threaded shaft accepts the end of the strap after the strap is tightened. A pawl may be mounted to the lever for reciprocal movement to permit engaging and disengaging from the at least one ratchet wheel.

### SUMMARY OF THE INVENTION

The primary objective of the present invention is to provide a tensioning apparatus, which can obviate or at least alleviate the problems encountered in the prior art.

The foregoing objective of the present invention is attained by the tensioning apparatus composed of a frame, a first shaft rotatably mounted on the frame, and a lever connected with the first shaft and operably pivoting with respect to the frame to rotate the first shaft. Additionally, the lever further includes a gripping portion mounted thereon and used for pivoting the lever. A reeling device includes a second shaft rotatably mounted on the lever. Further, a ratcheting mechanism includes a ratchet member mounted on the second shaft and rotated with the second shaft, a pawl operably moveable between a first position in engagement with the ratchet member and a second position disengaging from the ratchet member, and an elastic element having a first end mounted on the lever and a second end connected with the pawl for biasably engaging the pawl with the ratchet member. Furthermore, a strap is inserted through the first shaft and includes first and second portions extending in opposite directions, with the first shaft rotatable to collect the first portion of the strap, and with the reeling device rotatable to collect the second portion of the strap.

### BRIEF DESCRIPTION OF THE DRAWINGS

FIG 1 is a perspective view of a first preferred embodiment of the present invention.
FIG 2 is another perspective view of the first preferred embodiment of the present invention, taken in a different angle from that of FIG. 1.
FIG. 3 is a partially exploded view of the first preferred embodiment of the present invention, showing a reeling device and a ratcheting mechanism.
FIG. 4 is a perspective view of the first preferred embodiment of the present invention, showing a strap wound on a first shaft and with two portions extending oppositely.

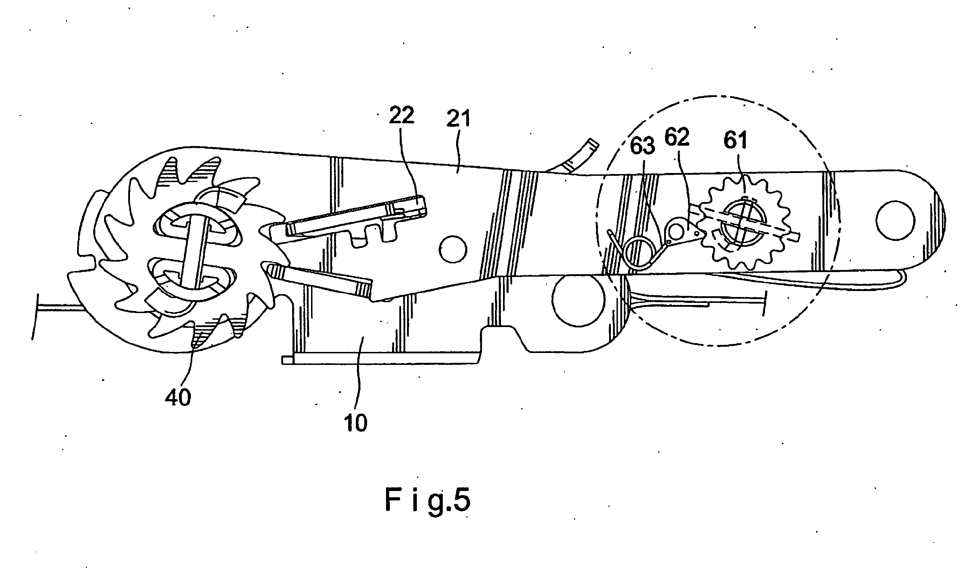

FIG. 5 is a side view of the tensioning apparatus shown in FIG.4.
FIG. 6 is a partially enlarged view of FIG.5
FIG. 7 an extended view of FIG. 5, showing the operational movement of the reeling device and the ratcheting mechanism.
FIG. 8 an extended view of FIG.5, illustrating that the ratcheting mechanism disengages from the reeling device.
FIG. 9 is a sectional view taken along a line 9-9 indicated in FIG. 4.
FIG. 10 an extended view of FIG. 9, illustrating that the strap is receivable by the reeling device.
FIG. 11 is an extended view of FIG. 10, illustrating that the strap is collected on the reeling device.
FIG. 12 is a perspective view of a second preferred embodiment of the present invention.
FIG. 13 is another perspective view of the second preferred embodiment of the present invention, taken in a different angle from that of FIG. 1.
FIG. 14 is another perspective view of the second preferred embodiment of the present invention, showing an alternative status of a grip.
FIG. 15 is a perspective view of a third preferred embodiment of the present invention.
FIG. 16 is a perspective view of the third preferred embodiment of the present invention in action, illustrating the strap is collected on a second shaft.

### DETAILED DESCRIPTION OF PREFERRED EMBODIMENTS

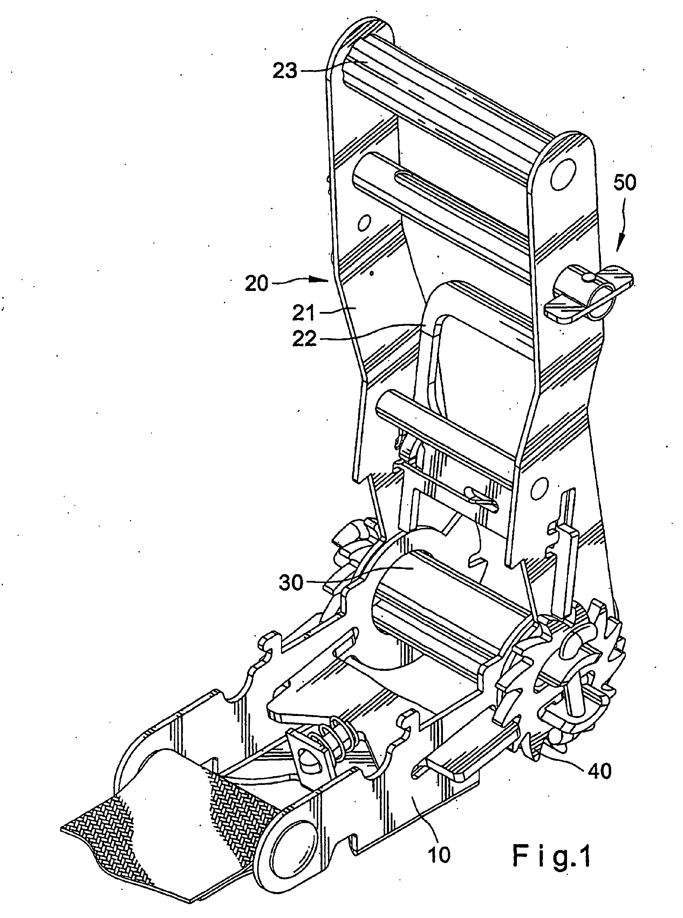

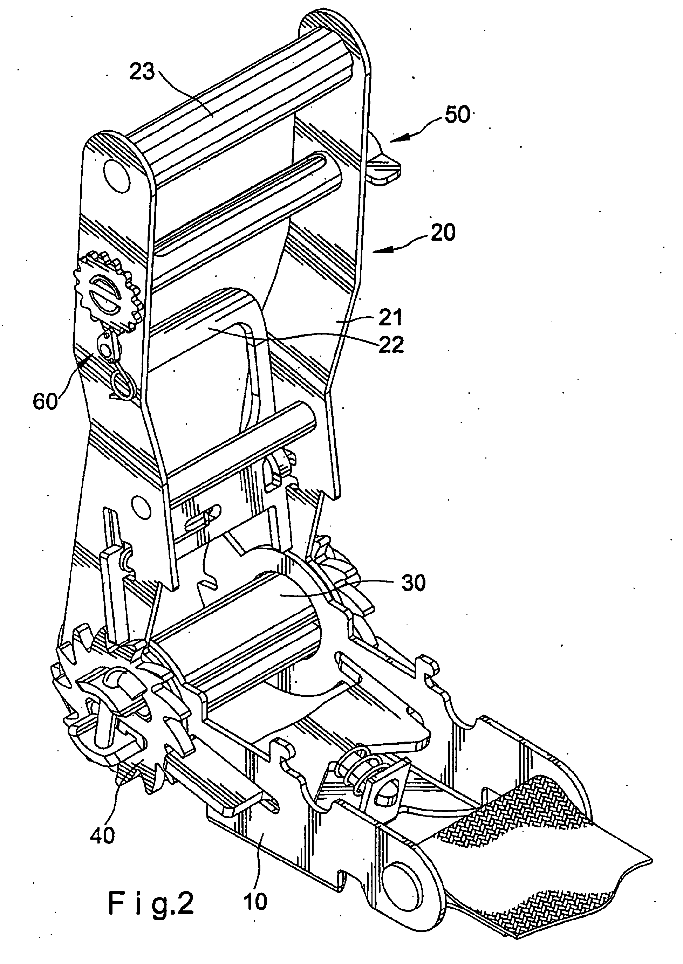

FIGS. 1 and 2 show a tensioning apparatus in accordance with a first preferred embodiment of the present invention. The tensioning apparatus includes a frame 10, a lever 20, and a first shaft 30 received by the frame 10 and the lever 20. The first shaft 30 is rotatable on the frame 10 by pivoting the lever 20 with respect to the frame 10. Two ratchet wheels 40 are connected to the first shaft 30. Additionally, the two ratchet wheels 40 are rotatable with the first shaft 30 as the lever 20 pivots.

The lever 20 includes a pair of cams 21 spaced from each other. The first shaft 30 is installed between the cams 21 and interconnects the cams 21. A gripping portion 23 is installed between the cams 21 and interconnects the cams 21, for pivoting the lever 20. Additionally, a detent 22 is movably installed on the lever 20 and is moveable between an operative position, in which the ratchet wheels 40 is engaged with detent 22 in order to rotate the first shaft 30, and an idle position, in which is the detent 22 is away from the ratchet wheels 40.

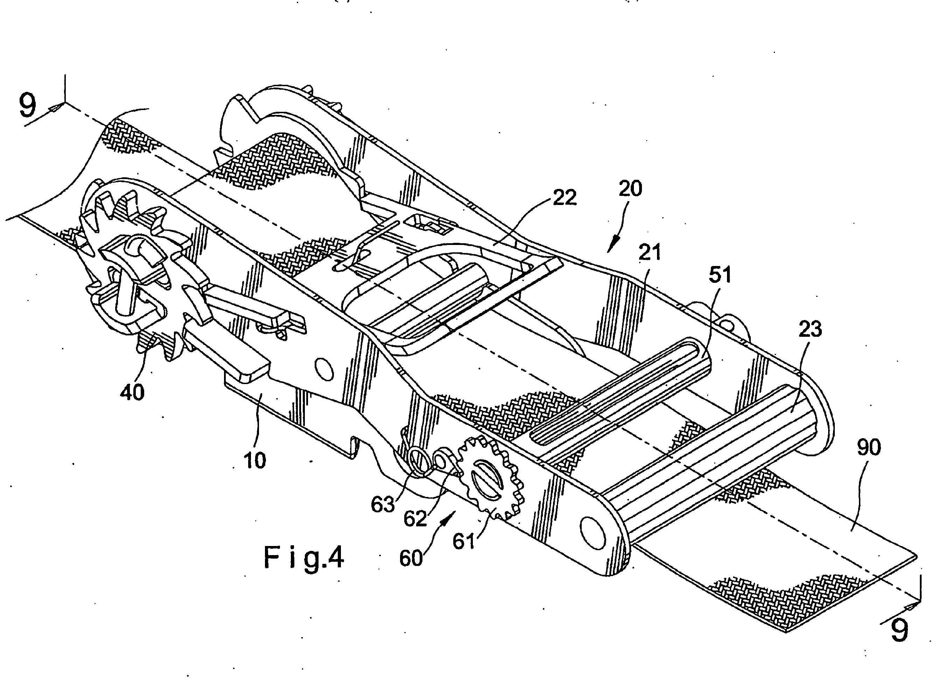

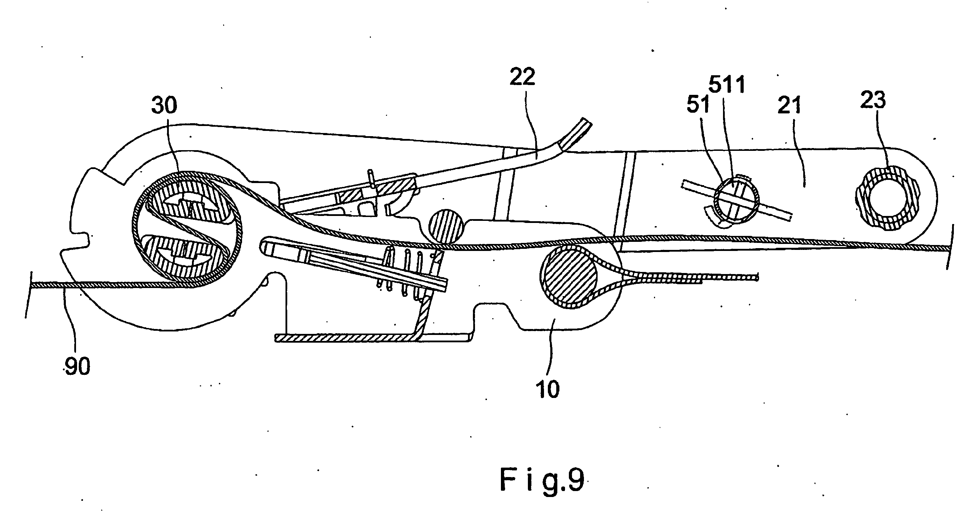

Where the tensioning apparatus is adapted to tension a strap 90, the strap 90 is inserted through the first shaft 30 to include a first portion and a second portion, both of which extend in opposite directions respectively, as shown in FIG. 4 or 9. It is understood that the first portion of the strap 90 is adapted to be collected on the first shaft 30 by reciprocally pivoting the lever 20. Additionally, FIG.9 shows that the lever 20 is in a stowed position after finishing collecting the strap 90.

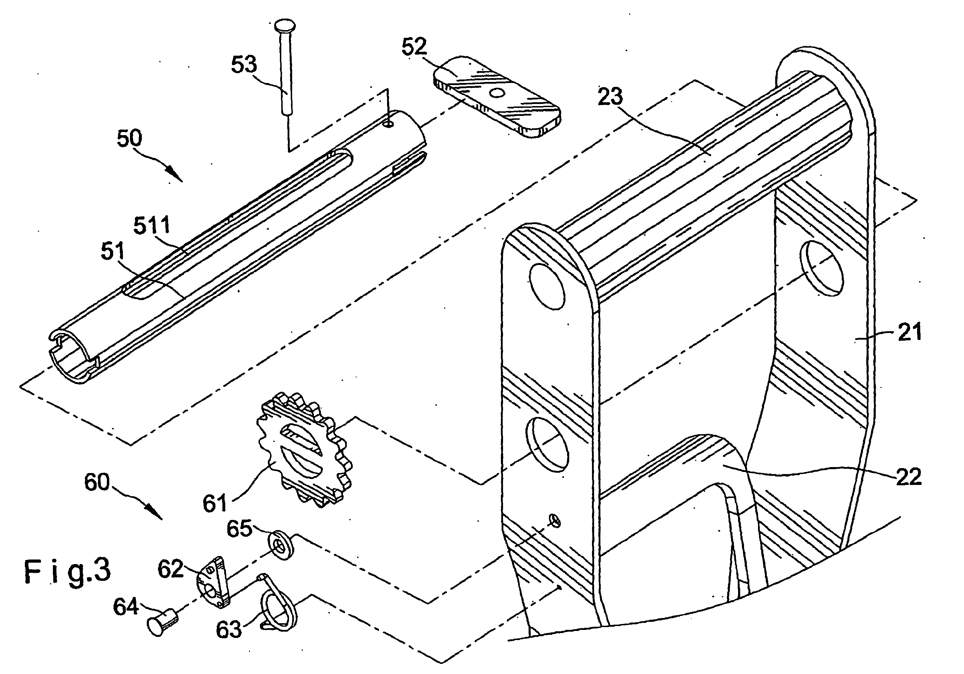

The tensioning apparatus further includes a reeling device 50 for collecting the second portion of the strap 90 and a ratcheting mechanism 60. The reeling device 50 is installed between the cams 21 and interconnects the cams 21. The ratcheting mechanism 60 is installed on one of the cams 21. FIG. 3 shows that the reeling device 50 includes a second shaft 51, and the user can operably rotate the second shaft 51. The second shaft 51 is installed between the cams 21. In this preferred embodiment, the second shaft 51 is disposed between the gripping portion 23 and the detent 22. The reeling device 50 may include a handle 52 connected to the second shaft 51 for facilitating user to rotate the second shaft 51. Additionally, the handle 52 is preferably disposed outside a space delimited between the cams 21, so that user can easily operate the handle 52. Also, a fastener 53 may be used to secure the handle 52 to the second shaft 51. Furthermore, the second shaft 51 may include a slot 511 for facilitating the second portion of the strap 90 to be mounted to the second shaft 51.

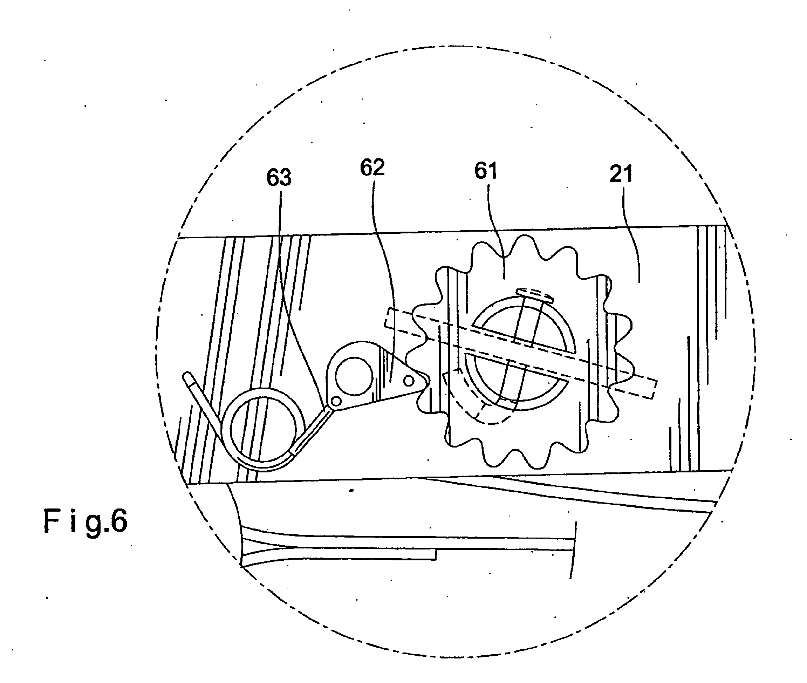

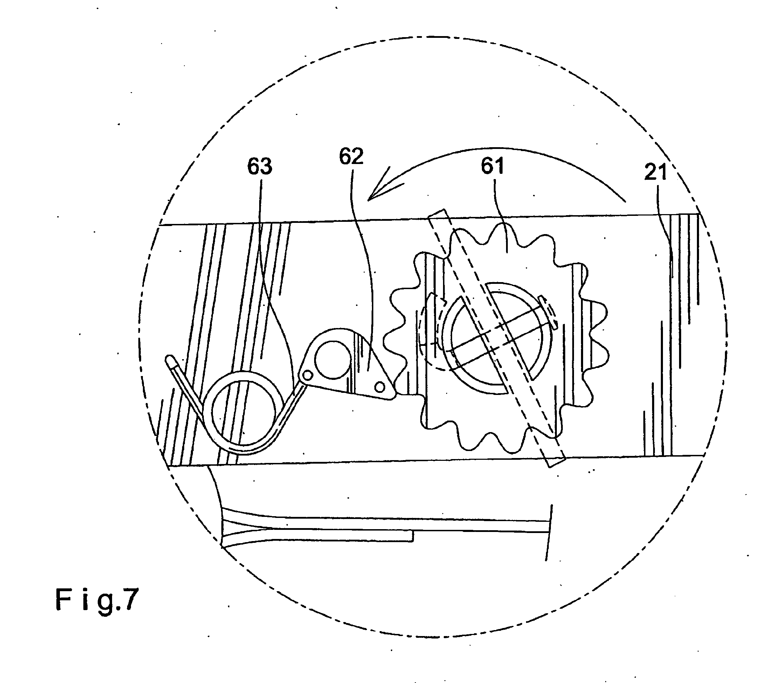

FIG. 3 also shows that the reeling device 60 includes a ratchet member 61, a pawl 62, and an elastic element 63. The ratchet member 61 includes a plurality of teeth. Additionally, the ratchet member 61 is mounted on the second shaft 51 and can be rotated along with the second shaft 51 as the second shaft 51 is rotated. The pawl 62 is engaged in the space between two of the teeth of the ratchet member 61, as shown in FIG. 6. FIG. 6 also shows that the elastic element 63 has one end mounted on the cam 21 and the other end connected with the pawl 62. Thus, when the ratchet member 61 is rotated, the pawl 62 disengages from the space and is biasably urged by the elastic element 63 to engage in the space between another two of the teeth of the ratchet member 61, as shown in FIG. 7. Further, the pawl 62 is securely mounted on the cam 21 by a connector 64. Furthermore, a spacer 65 may be used between the pawl 62 and the cam 21.

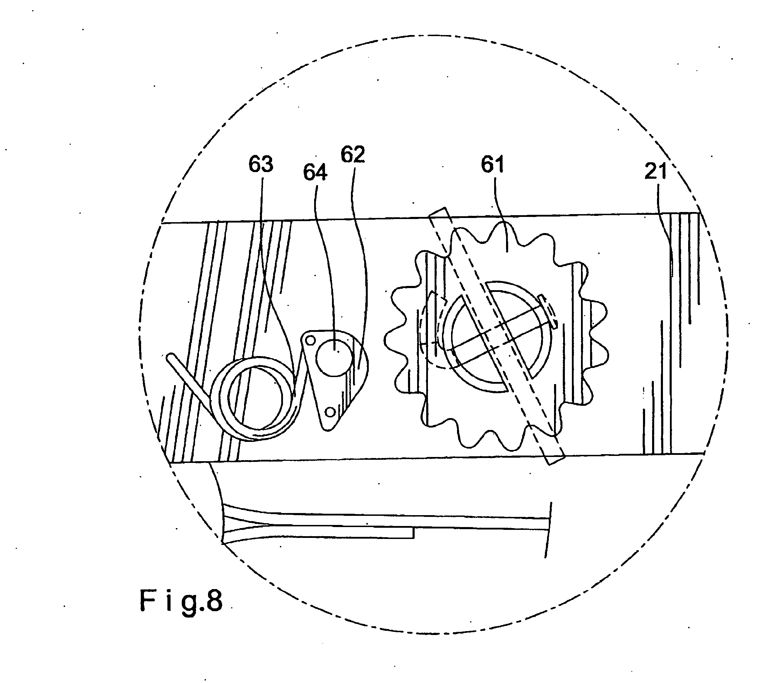

FIG. 8 shows that the pawl 62 is retained at a position that it disengage from the ratchet member 61. Under this circumstance, the user can unreel the second portion of the strap 90 collected on the reeling device 50.

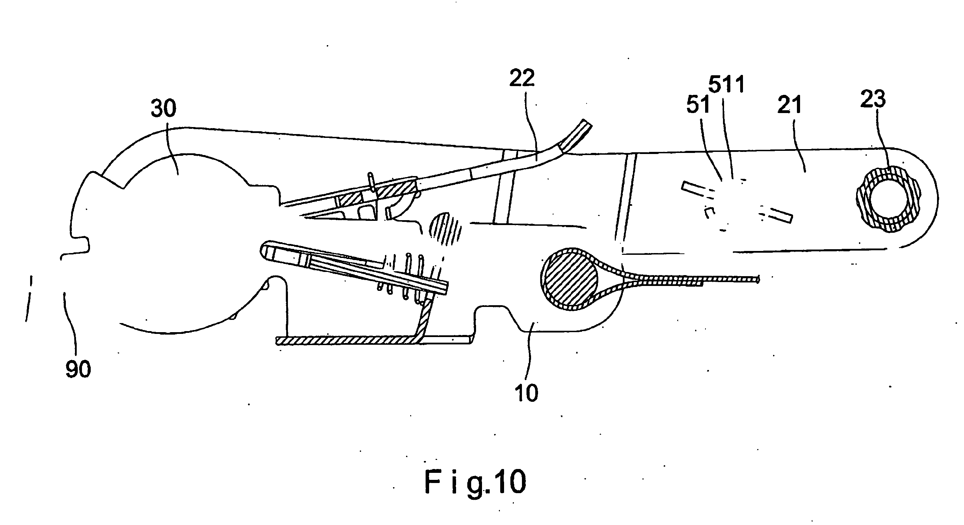

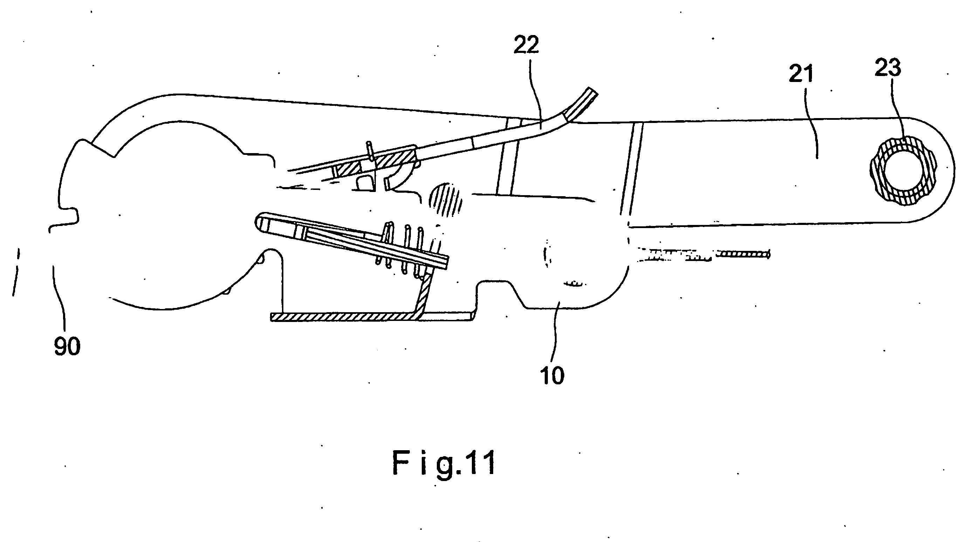

Referring to FIGS. 9-11, when collecting the second portion of the strap 90, the strap 90 is inserted through the slot 511, and the strap 90 is collected on the second shaft 51 of the reeling device 50 by operating the handle 52 to rotate the second shaft 51.

It is an aspect of the present invention that the reeling device 50 is used for collecting the second portion of the strap 90.

It is another aspect of the present invention that the gripping portion 23 of the lever 20 is used to pivot the lever 20, and the strap 90 on the reeling device 50 will not interfere with the user's holding of the gripping portion 20.

It is a further aspect of the present invention that the ratcheting mechanism 60 facilitates collection of the second portion of the strap 90 by preventing the second shaft 51 from turning in a direction to unreel the strap 90.

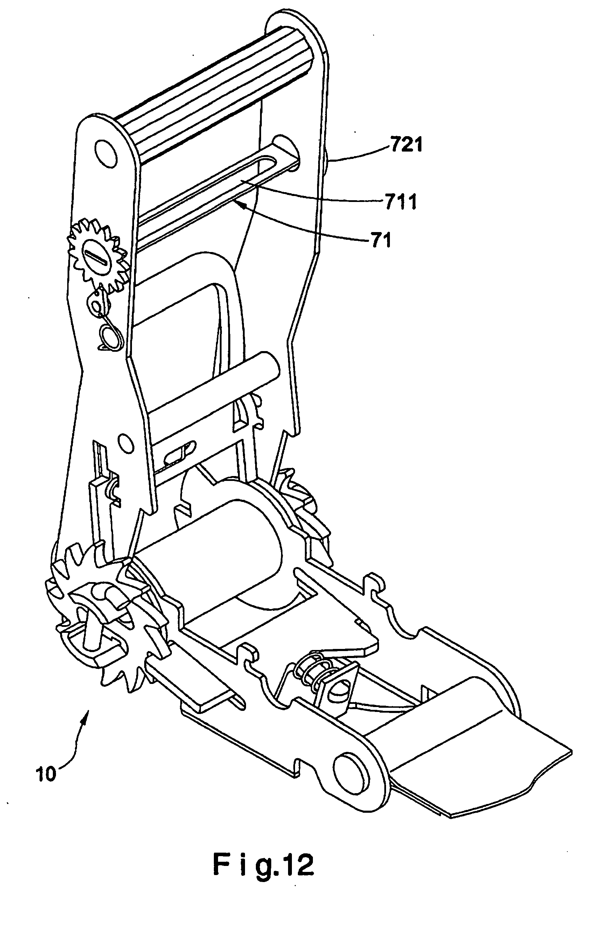

Referring to FIGS. 12-13, a tensioning apparatus 70 in accordance with a second preferred embodiment of the present invention is similar to that of the first embodiment, having the following differences recited in the respective paragraphs.

The second shaft 71 is plate-shaped and includes a predetermined width at one of two sides of the slot 711.

The handle 72 is composed of a knob 721 and a grip 722. The knob 721 is connected with one end of the second shaft 71 and located outside a space between the two cams 73. The grip 722 is located on the knob 721 and spaced from an axis of the second shaft 71 for a predetermined interval for the user to hold. When the grip 722 is operated, a torque is generated with respect to the axis of the second shaft 71 to drive rotation of the second shaft 71. The plate-shaped second shaft 71 with the predetermined widths can prolong a single-loop length of the second portion of the strap 90 collected on the second shaft 71 to facilitate the collection.

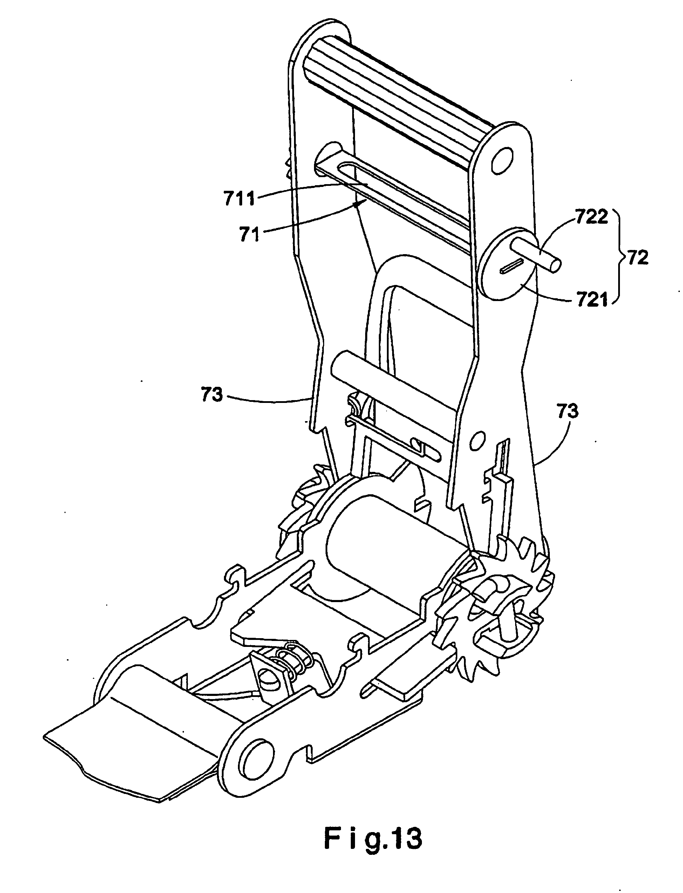

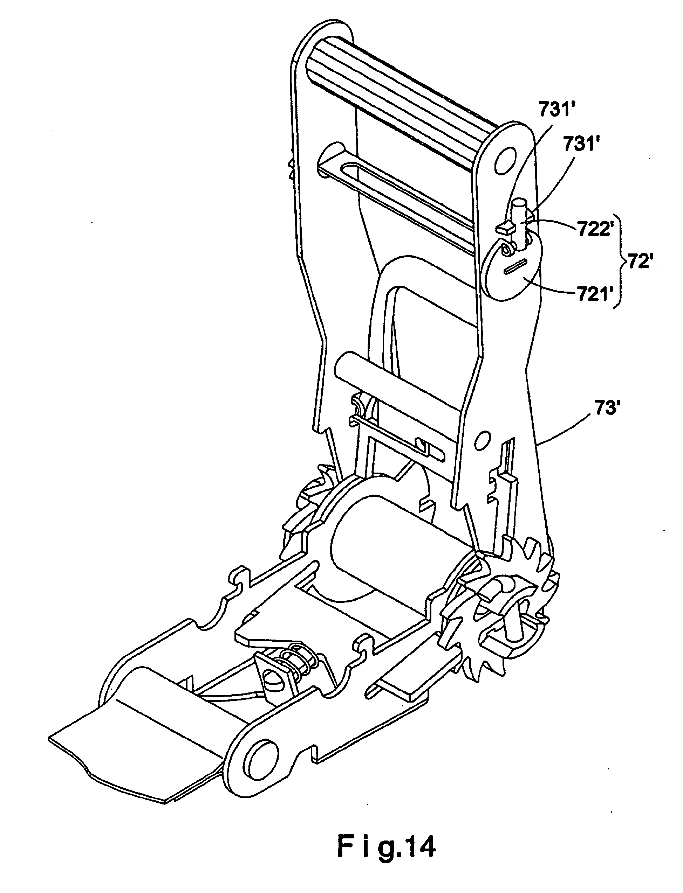

The grip 722 shown in FIG. 13 is fixed to the knob 721 as an example and can be alternatively connected with the knob 721. Referring to FIG. 14, the grip 722' is pivoted to the knob 721'. The cam 73' close to the handle 72' includes two lugs 731' formed on a surface thereof. When the grip 722' pivots to hug the cam 73', the grip 722' engages in a space between the two lugs 731' and meanwhile, the grip 722' is not ready for operation. When it is intended to operate the grip 722', the grip 722' can pivot to be away from and perpendicular to the knob 721' for the user's hand to hold for operation.

The other structures of the second embodiment and the effects they can make are identical to those of the first embodiment, such that more recitation is skipped.

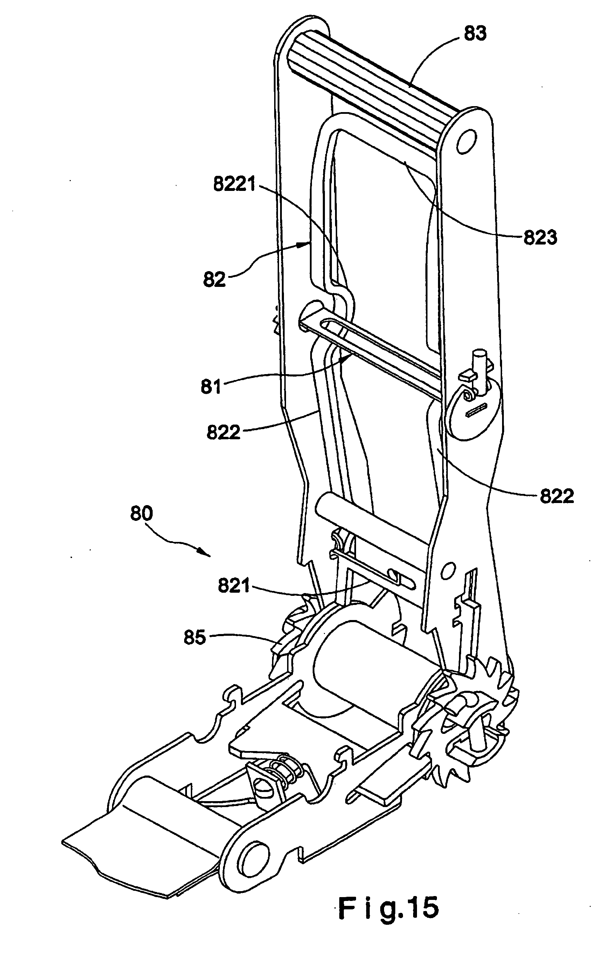

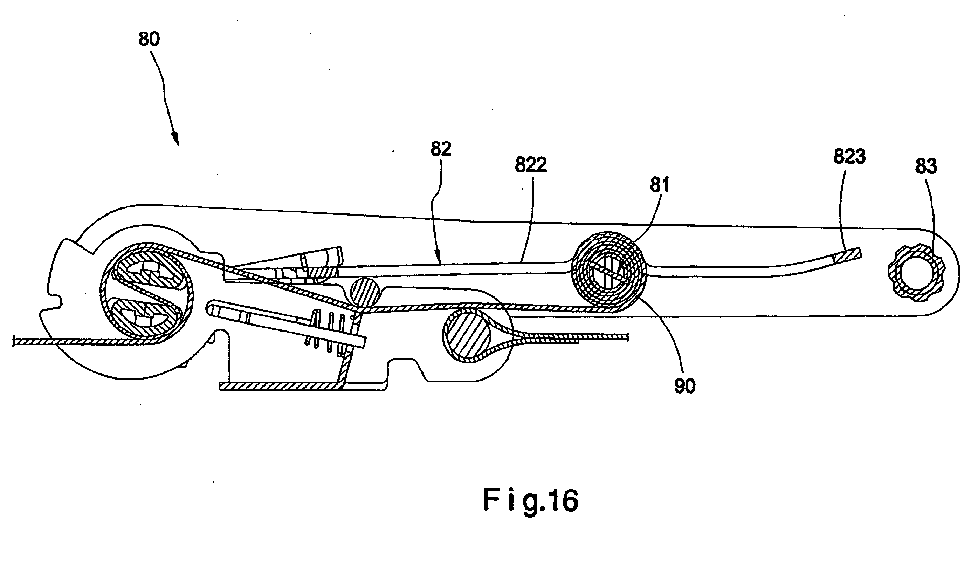

Referring to FIGS. 15-16, a tensioning apparatus 80 in accordance with a third preferred embodiment of the present invention is similar to that of the first embodiment, having the following differences recited in the respective paragraphs.

The detent 82 includes a retaining portion 821 for engaging and disengaging from the ratchet wheel 85, two lateral strips 822 extending toward the gripping portion 83 from two sides of the retaining portion 821, and an operation portion 823 having two sides each connected with one of two distal ends of the lateral strips 822. The operation portion 823 is located between the gripping portion 83 and the second shaft 81. In this embodiment, each of the lateral strips 822 has a bended portion 8221. The bended portions 8221 allow the lateral strips 822 to circumvent the second shaft 81 toward the gripping portion 83. Besides, the second portion of the strap 90 collected on the second shaft 81 is located between the two lateral strips 822.

In light of the above, the operation portion 823 is close to the gripping portion 83, such that when the user holds the gripping portion 83, the user can easily open his or her hand to use the finger to operate the operation portion 823 for controlling the detent 82. Besides, the second portion of the strap 90 collected on the second shaft 81 can be retained by the two lateral strips 822, such that the second portion of the strap 90 can be more accurately wound on the second shaft 81 without skewness.

The other structures of the third embodiment and the effects they can make are identical to those of the first embodiment, such that more recitation is skipped.

Although the present invention has been described with respect to specific preferred embodiments thereof, it is in no way limited to the specifics of the illustrated structures but changes and modifications may be made within the scope of the appended claims.

## Claims

1. A tensioning apparatus, comprising:
a frame (10);
a first shaft (30) rotatably mounted on the frame (10);
a lever (20) connected with the first shaft (30) and operably pivoting with respect to the frame (10) to rotate the first shaft (30), the lever (20) having a gripping portion (23) mounted thereon and used for pivoting the lever (20);
a reeling device (50) having a second shaft (51) rotatably mounted on the lever (20); and
a strap (90) inserted through the first shaft (30) and having a first portion and a second portion, both of which extend in opposite directions, the first shaft (30) being rotatable to collect the first portion of the strap (90), the reeling device (50) being rotatable to collect the second portion of the strap (90); **characterized in that** the apparatus further comprises:
a ratcheting mechanism (60) having a ratchet member (61) mounted on the second shaft (51) and rotated with the second shaft (51), a pawl (62), and an elastic element (63) biasably engaging the pawl (62) with the ratchet member (61);
wherein engaging between the ratchet member (61) and the pawl (62) provides a step-by-step effect and facilitates collection of the second portion of the strap (90) by preventing the second shaft (51) from turning in a direction to unreel the strap (90).

2. The tensioning apparatus as defined in claim 1, wherein the tensioning apparatus further comprises a ratchet wheel (85) mounted on the first shaft (30), and a detent (82) movably installed on the lever (20) between an operative position, in which the detent (82) engages the ratchet wheel (85) in order to rotate the shaft (30), and an idle position, in which the detent (82) is away from the ratchet wheel (85).

3. The tensioning apparatus as defined in claim 1, wherein the lever (20) includes a pair of cams (21) spaced from each other.

4. The tensioning apparatus as defined in claim 3, wherein the second shaft (51) is installed between the cams (21).

5. The tensioning apparatus as defined in claim 2, wherein the second shaft (51) is disposed between the gripping portion (23) and the detent (82).

6. The tensioning apparatus as defined in claim 1, wherein the reeling device (50) comprises a handle (52) connected to the second shaft (51) for facilitating user to rotate the second shaft (51).

7. The tensioning apparatus as defined in claim 1, wherein the second shaft (51) comprises a slot (511) for facilitating the second portion of the strap (90) to be attached to the second shaft (51).

8. The tensioning apparatus as defined in claim 1, wherein the ratchet member (61) comprises a plurality of teeth; the pawl (62) can engage in a space between two of teeth of the ratchet member (61) and the pawl (62) can disengage from the space and be biasably urged to engage in a space between another two of teeth of the ratchet member (61) by the elastic element (63) during rotation of the ratchet member (61).

9. The tensioning apparatus as defined in claim 3, wherein the first shaft (30) is mounted between and interconnects the cams (21).

10. The tensioning apparatus as defined in claim 3, wherein the gripping portion (23) is mounted between and interconnects the cams (21).

11. The tensioning apparatus as defined in claim 1, wherein
(a) the pawl (62) is operably moveable between a first position, in which the pawl (62) engages the ratchet member (61), and a second position, in which the pawl (62) disengages from the ratchet member (61); the second portion of the strap (90) collected on the reeling device (51) can be unreeled; or
(b) the elastic element (63) comprises a first end mounted on the lever (20), and a second end connected with the pawl (62).

12. The tensioning apparatus as defined in claim 7, wherein the second shaft (51) is plate-shaped, preferably wherein the second shaft (51) comprises a predetermined width at each of two side of the slot (511).

13. The tensioning apparatus as defined in claim 2, wherein the detent (82) comprises a retaining portion (821) for engaging the ratchet wheel (85), two lateral strips (822) extending toward the gripping portion (23) from two sides of the retaining portion (821), and an operation portion (823) located between the gripping portion (23) and the second shaft (51) and having two sides each connected with a distal end of one of the two lateral strips (822).

14. The tensioning apparatus as defined in claim 13, wherein
(a) each of the lateral strips (822) comprises a bended potion (8221) for circumventing the second shaft (51) toward the gripping portion (23); or
(b) the second portion of the strap (90) collected on the second shaft (51) is located between the two lateral strips (822).

15. The tensioning apparatus as defined in claim 6, wherein the handle (52) is composed of at least one knob (721) and a grip (722), the knob (721) being connected with an end of the second shaft (51) and located outside a space between the two cams (21), the grip (722) being mounted to the knob (721) and spaced from an axis of the second shaft (51); preferably
wherein the cam (21) close to the handle (52) comprises two lugs (731') formed on a surface thereof; the grip (722) is pivoted to the knob (721); when the grip (722) pivots to hug the cam (21), the grip (722) engages in a space between the two lugs (721').

## Patentansprüche

1. Spannvorrichtung, umfassend:
Einen Rahmen (10),
eine an dem Rahmen (10) drehbar angeordnete erste Achse (30),
einen mit der ersten Achse (30) verbundenen Hebel (20), der in Bezug auf den Rahmen beim Betrieb geschwenkt wird, um die erste Achse (30) zu drehen, worin der Hebel (20) einen daran angeordneten Griffbereich (23) aufweist, der zum Schwenken des Hebels (20) verwendet wird,
eine Aufrollvorrichtung (50) mit einer zweiten Achse (51), die drehbar an dem Hebel (20) angeordnet ist, und
einen durch die erste Achse (30) eingeführten Gurt (90), der einen ersten Bereich und einen zweiten Bereich aufweist, die sich in entgegengesetzte Richtungen erstrecken, worin die erste Achse (30) drehbar ist, um den ersten Bereich des Gurtes (90) aufzunehmen, und worin die Aufrollvorrichtung (50) drehbar ist, um den zweiten Bereich des Gurtes (90) aufzunehmen, **dadurch gekennzeichnet, dass** die Spannvorrichtung weiterhin umfasst:
Einen Ratschenmechanismus (60) mit einem Ratschenelement (61), das an der zweiten Achse (51) angeordnet ist und mit der zweiten Achse (51) gedreht wird, einer Klaue (62) und einem elastischen Element (63), das vorspannend die Klaue (62) mit dem Ratschenelement (61) in Eingriff bringt, worin das Eingreifen zwischen dem Ratschenelement (61) und der Klaue (62) einen Schritt-für-Schritt Effekt bereitstellt und die Aufnahme des zweiten Bereichs des Gurtes (90) **dadurch** ermöglicht, dass die zweite Achse (51) daran gehindert wird, in eine Richtung zu drehen, in der das Abrollen des Gurtes (90) möglich ist.

2. Spannvorrichtung nach Anspruch 1, worin die Spannvorrichtung weiter umfasst: Ein an der ersten Achse (30) angeordnetes Rastrad (85) und eine an dem Hebel (20) angeordnete Raste (82), die zwischen einer Betriebsposition, in der die Raste (82) in das Rastrad (85) eingreift, und einer Leerlaufposition, in der sich die Raste (82) von dem Rastrad (85) entfernt befindet, bewegt werden kann.

3. Spannvorrichtung nach Anspruch 1, worin der Hebel (20) ein Paar voneinander beabstandete Seitenelemente (21) umfasst.

4. Spannvorrichtung nach Anspruch 3, worin die zweite Achse (51) zwischen den Seitenelementen (21) angeordnet ist.

5. Spannvorrichtung nach Anspruch 2, worin die zweite Achse (51) zwischen dem Griffbereich (23) und der Raste (82) angeordnet ist.

6. Spannvorrichtung nach Anspruch 1, worin die Aufrollvorrichtung (50) einen mit der zweiten Achse (51) verbundenen Griff (52) umfasst, um dem Anwender ein Drehen der zweiten Achse (51) zu ermöglichen.

7. Spannvorrichtung nach Anspruch 1, worin die zweite Achse (51) einen Schlitz (511) aufweist, um es dem zweiten Bereich des Gurtes (90) zu ermöglichen, an der zweiten Achse (51) befestigt zu werden.

8. Spannvorrichtung nach Anspruch 1, worin das Ratschenelement (61) mehrere Zähne umfasst, und worin die Klaue (62) in einen Raum zwischen zwei Zähnen des Ratschenelements (61) eingreifen kann, und worin die Klaue (62) sich aus dem Raum lösen und durch Vorspannung in einen Raum zwischen zwei anderen Zähnen des Ratschenelements (61) durch das elastische Element (63) während der Drehung des Ratschenelements (61) gedrängt werden kann.

9. Spannvorrichtung nach Anspruch 3, worin die erste Achse (30) zwischen den Seitenelementen (21) angeordnet ist und diese verbindet.

10. Spannvorrichtung nach Anspruch 3, worin der Griffbereich (23) zwischen den Seitenelementen (21) angeordnet ist und diese verbindet.

11. Spannvorrichtung nach Anspruch 1, worin
(a) die Klaue (62) zwischen einer ersten Position, in der die Klaue (62) in das Ratschenelement (61) eingreift, und einer zweiten Position, in der sich die Klaue (62) von dem Ratschenelement (61) entkuppelt, beweglich ist, worin der zweite Bereich des auf der Aufrollvorrichtung (50) aufgenommenen Gurtes (90) abgerollt werden kann, oder
(b) das elastische Element (63) ein an dem Hebel (20) befestigtes erstes Ende aufweist, und ein mit der Klaue (62) verbundenes zweites Ende.

12. Spannvorrichtung nach Anspruch 7, worin die zweite Achse (51) plattenförmig ausgebildet ist, vorzugsweise worin die zweite Achse (51) eine bestimmte Breite an jeder der zwei Seiten des Schlitzes (511) umfasst.

13. Spannvorrichtung nach Anspruch 2, worin die Raste (82) umfasst, einen Rückhaltebereich (821) zum Eingreifen in das Rastrad (85), zwei laterale Leisten (822), die sich von zwei Seiten des Rückhaltebereichs (821) in Richtung des Griffbereichs (23) erstrecken, und einen Betriebsbereich (823), der sich zwischen dem Griffbereich (23) und der zweiten Achse (51) befindet und zwei Seiten aufweist, von denen jede mit einem distalen Ende eines der zwei lateralen Streifen (822) verbunden ist.

14. Spannvorrichtung nach Anspruch 13, worin
(a) jeder der lateralen Streifen (822) einen gebogenen Bereich (8221) zum Umlaufen der zweiten Achse (51) in Richtung des Griffbereichs (23) umfasst, oder
(b) der auf der zweiten Achse (51) aufgenommene zweite Bereich des Gurtes (90) sich zwischen den zwei lateralen Streifen (822) befindet.

15. Spannvorrichtung nach Anspruch 6, worin der Griff (52) aus mindestens einem Drehknopf (721) und einer Halterung (722) besteht, worin der Drehknopf (721) mit einem Ende der zweiten Achse (51) verbunden ist und sich außerhalb eines Raumes zwischen den zwei Seitenelementen (21) befindet, worin die Halterung (722) an dem Drehknopf (721) angeordnet ist und von einer Achse der zweiten Achse (51) beabstandet ist, vorzugsweise worin das sich dicht an dem Griff (52) befindliche Seitenelement (21) zwei Ansatzstücke (731') umfasst, die an einer Oberfläche davon gebildet sind, worin die Halterung (722) schwenkbar an dem Drehknopf (721) angeordnet ist; wenn die Halterung (722) geschwenkt wird, um das Seitenelement (21) zu berühren, greift die Halterung (722) zwischen den beiden Ansatzstücke (721') ein.

## Revendications

1. Appareil de tension, comprenant:
un cadre (10);
un premier arbre (30) monté rotatif sur le cadre (10);
un levier (20) connecté au premier arbre (30) et pivotant de manière opérationnelle par rapport au cadre (10) pour faire tourner le premier arbre (30), le levier (20) ayant une partie de préhension (23) montée sur celui-ci et servant à faire pivoter le levier (20);
un dispositif d'enroulement (50) ayant un second arbre (51) monté rotatif sur le levier (20); et
une sangle (90) introduite à travers le premier arbre (30) et présentant une première partie et une seconde partie, les deux s'étendant dans des directions opposées, le premier arbre (30) étant rotatif pour saisir la première partie de la sangle (90), le dispositif d'enroulement (50) étant rotatif pour saisir la seconde partie de la sangle (90); **caractérisé en ce** l'appareil de tension comprenant en outre:
un mécanisme à rochet (60) ayant un élément à rochet (61) est monté sur le second arbre (51) et mis en rotation avec le second arbre (51), un doigt (62) et un élément élastique (63) engagent de manière polarisable le doigt (62) avec l'élément à rochet (61); où l'engagement entre l'élément à rochet (61) et le doigt (62) produit un effet pas à pas et facilite la prise de la seconde partie de la sangle (90) en empêchant le second arbre (51) de tourner dans un sens de déroulement de la sangle (90).

2. Appareil de tension tel que défini dans la revendication 1, où l'appareil de tension comprend en outre une roue à rochet (85) montée sur le premier arbre (30), et une détente (82) installée de façon mobile sur le levier (20) entre une position opérationnelle, dans laquelle la détente (82) s'engage dans la roue à rochet (85) pour faire tourner l'arbre (30), et une position au repos, dans laquelle la détente (82) est éloignée de la roue à rochet (85).

3. Appareil de tension tel que défini dans la revendication 1, où le levier (20) comporte une paire de cames (21) espacées l'une de l'autre.

4. Appareil de tension tel que défini dans la revendication 3, où le second arbre (51) est installé entre les cames (21).

5. Appareil de tension tel que défini dans la revendication 2, où le second arbre (51) est disposé entre la partie de préhension (23) et la détente (82).

6. Appareil de tension tel que défini dans la revendication 1, où le dispositif d'enroulement (50) comprend une poignée (52) reliée au second arbre (51) pour faciliter la rotation du second arbre (51) par l'utilisateur.

7. Appareil de tension tel que défini dans la revendication 1, où le second arbre (51) comprend une fente (511) pour faciliter la fixation de la seconde partie de la sangle (90) au second arbre (51).

8. Appareil de tension tel que défini dans la revendication 1, où l'élément à rochet (61) comprend un pluralité de dents; le doigt (62) pouvant s'engager dans un espace entre deux dents de l'élément à rochet (61) et le doigt (62) pouvant se dégager dudit espace et, de manière polarisable, s'engager de force dans un espace entre deux autres dents de l'élément à rochet (61) sous l'effet de l'élément élastique (63) pendant la rotation de l'élément à rochet (61).

9. Appareil de tension tel que défini dans la revendication 3, où le premier arbre (30) est monté entre et interconnecte les cames (21).

10. Appareil de tension tel que défini dans la revendication 3, où la partie de préhension (23) est montée entre et interconnecte les cames (21).

11. Appareil de tension tel que défini dans la revendication 1, dans lequel
(a) le doigt (62) est mobile de manière opérationnelle entre une première position, dans laquelle le doigt (62) s'engage dans l'élément à rochet (61), et une seconde position, dans laquelle le doigt (62) se dégage de l'élément à rochet (61 ); la seconde partie de la sangle (90) accumulée sur le dispositif d'enroulement (51) pouvant être déroulée; ou
(b) l'élément élastique (63) comprend une première extrémité montée sur le levier (20), et une seconde extrémité connectée au doigt (62).

12. Appareil de tension tel que défini dans la revendication 7, dans lequel le second arbre (51) est en forme de plaque; de préférence
dans lequel le second arbre (51) présente une largeur prédéterminée de chaque côté de la fente (511).

13. Appareil de tension tel que défini dans la revendication 2, dans lequel la détente (82) comprend une partie de retenue (821) pour s'engager dans la roue à rochet (85), deux bandes latérales (822) s'étendant vers la partie de préhension (23) depuis deux côtés de la partie de retenue (821), et une partie opérationnelle (823) située entre la partie de préhension (23) et le seconde arbre (51) et dont les deux côtés sont chacun connectés à une extrémité distale de l'une des deux bandes latérales (822).

14. Appareil de tension tel que défini dans la revendication 13, dans lequel
(a) chacune des bandes latérales (822) comprend une partie coudée (8221) pour contourner le second arbre (51) vers la partie de préhension (23); ou
(b) la seconde portion de la sangle (90) accumulée sur le second arbre (51) est située entre les deux bandes latérales (822).

15. Appareil de tension tel que défini dans la revendication 6, dans lequel la poignée (52) est composée d'au moins un bouton (721) et d'un corps de poignée (722), le bouton (721) étant connecté à une extrémité du second arbre (51) et situé en dehors d'un espace entre les deux cames (21), le corps de poignée (722) étant monté sur le bouton (721) et espacé d'un axe du second arbre (51); de préférence
dans lequel la came (21) proche de la poignée (52) comprend deux tenons (731') constitués sur une surface de celle-ci; le corps de poignée (722) pivotant de force vers le bouton (721); lorsque le corps de poignée (722) pivote pour saisir la came (21), le corps de poignée (722) s'engage dans un espace entre les deux tenons (721').
